Europäisches Patentamt

European Patent Office

Office européen des brevets

(11) Publication number: **0 420 256 B1**

# EUROPEAN PATENT SPECIFICATION

(45) Date of publication of patent specification: **17.05.95**   (51) Int. Cl.⁶: **B29C 70/00,** D04H 11/00

(21) Application number: **90118596.7**

(22) Date of filing: **27.09.90**

(54) **Increased pile density composite elastic material.**

(30) Priority: **29.09.89 US 414482**

(43) Date of publication of application:
**03.04.91 Bulletin 91/14**

(45) Publication of the grant of the patent:
**17.05.95 Bulletin 95/20**

(84) Designated Contracting States:
**AT BE CH DE DK ES FR GB GR IT LI NL SE**

(56) References cited:
**EP-A- 0 158 721
EP-A- 0 212 284
US-A- 4 446 189
US-A- 4 876 128**

(73) Proprietor: **KIMBERLY-CLARK CORPORATION
401 North Lake Street
Neenah,
Wisconsin 54956-0349 (US)**

(72) Inventor: **Cohen, Bernard
381 Lakeshore Drive
Duluth
Georgia 30136 (US)**
Inventor: **Roeder, Robert Jon
490 Meadowglen Trail
Roswell
Georgia 30075 (US)**
Inventor: **Shultz, Jay Sheldon
550 Woodline Court
Roswell
Georgia 30076 (US)**
Inventor: **Venkatapathy,Raju
950 Cranberry Trail
Roswell
Georgia 30076 (US)**

(74) Representative: **Patentanwälte Grünecker,
Kinkeldey, Stockmair, Aufenanger & Partner
Maximilianstrasse 58
D-80538 München (DE)**

Rank Xerox (UK) Business Services
(3. 10/3.09/3.3.3)

EP 0 420 256 B1

**Description**

FIELD OF THE INVENTION

The present invention relates to pile fabrics and a method of making the same.

BACKGROUND OF THE INVENTION

There has been a continuing need for pile fabrics having a high degree of flexibility, elasticity, bulk and strength and which may be manufactured at a low cost. This need has persisted in spite of the fact that such fabrics could readily be utilized to manufacture a wide variety of garments of both the disposable type, such as disposable workwear and disposable diapers, or the durable type, such as pants, dresses, blouses and sporting wear, for example, sweatsuits. Further, such fabrics could also be utilized in, for example, upholstery, drapery, liner and insulation applications.

In some situations, the value of the pile fabric relates to the density at which the fibrous materials are attached to the substrate and the flexibility and elasticity of the material. Pile fabrics having high densities of fibrous pile materials typically have richer surface textures and greater market value.

Pile fabrics may be formed by attaching fibrous materials such as, for example, fibers or fiber bundles to a substrate. Fibers may be inserted into a substrate utilizing processes such as, for example, mechanical needling. In some situations, pile fabrics may be formed by adhering fibers onto the surface of a substrate utilizing flocking techniques. Pile fabrics may also be formed by tufting or stitchbonding fiber bundles, such as, for example, yarns or threads into a substrate.

While pile fabrics having a high density of attached fibrous materials often have a pleasing surface appearance and feel, such fabrics may be so stiff so that the fabric is unsuitable for applications where flexibility and suppleness are desirable. For example, fabrics that are stiff and inflexible will conform poorly to the body of a wearer or to an item and are unsuitable for some apparel and upholstery applications.

When pile fabrics are made by attaching fibrous materials to a substrate utilizing mechanical needling, the density at which the fibrous materials may be attached to the substrate is limited by the distance between the mechanical needles. The density at which the fibrous materials are attached to the substrate may be increased by subjecting the fibrous materials and substrates to multiple passes through the mechanical needling apparatus. However, multiple passes result in matted, highly entangled materials that, in most situations, have low bulk and are essentially nonelastic. Post entanglement stretching may be used to return some elasticity to such composites, but such stretching may reduce the strength and durability of the composite material.

EP-A-0 212 284 describes a gathered nonwoven elastic web manufactured by forming a fibrous nonwoven web on the surface of an elastic web when the elastic web is in stretched condition.

An elastic laminate material may be made by mechanically needling a coherent nonwoven web of textile fibers to an elastic substrate only at spaced-apart locations. One such laminate material is disclosed by U. S. Patent No. 4,446,189 to Romanek in which a nonwoven textile fabric layer and a layer of generally elastic material are superposed and needlepunched to secure the fabric layer to the layer of generally elastic material at a plurality of needle punch locations each spaced a predetermined distance from the next adjacent needle punch location. The needle punched layers are drafted in at least one direction to permanently stretch the nonwoven textile fabric layer where it is not joined to the elastic layer. The superposed layers are allowed to relax so the elastic layer returns to substantially its original dimensions and the bulk of the stretched nonwoven textile fabric is increased between the needle punched locations.

A hydroentangled elastic nonwoven fabric may be made by stretching an elastic substrate in at least one direction before the elastic substrate is hydraulically entangled with a preformed fibrous web. A hydroentangled elastic fabric is disclosed by U. S. Patent No. 4,775,579 to Hagy et al. and may be prepared by stretching an elastic meltblown continuous filament web in at least one direction prior to hydraulic entanglement with a preformed web of wood pulp and absorbent staple length fibers.

DEFINITIONS

The term "elastic" is used herein to mean any material which, upon application of a biasing force, is stretchable, that is, elongatable, to a stretched, biased length which is at least about 125 percent of its relaxed unbiased length, and which, will recover at least 40 percent of its elongation upon release of the stretching, elongating force. A hypothetical example would be a 2,54 cm (1 inch) sample of a material which is elongatable to at least 3,17 cm (1.25 inches) and which, upon being elongated to 3,17 cm (1.25 inches)

2

and released, will recover to a length of not more than 2,92 cm (1.15 inches). Many elastic materials may be stretched by much more than 125 percent of their relaxed length, for example, 400 percent or more, and many of these will recover to substantially their original relaxed length, for example, to within 105 percent of their original relaxed length, upon release of the stretching force.

As used herein, the term "nonelastic" refers to any material which does not fall within the definition of "elastic," above.

As used herein, the terms "recover" and "recovery" refers to a contraction of a stretched material upon termination of a biasing force following stretching of the material by application of the biasing force. For example, if a material having a relaxed, unbiased length of 2,54 cm (1 inch) is elongated 50 percent by stretching to a length of 3,81 cm (1.5 inches) the material would be elongated 50 percent (1,27 cm or 0.5 inch) and would have a stretched length that is 150 percent of its relaxed length. If this exemplary stretched material contracted, that is recovered to a length of 2,79 cm (1.1 inches) after release of the biasing and stretching force, the material would have recovered 80 percent (1,02 cm or 0.4 inch) of its 1,27 cm (0.5 inch) elongation. Recovery may be expressed as [(maximum stretch length - final sample length)/(maximum stretch length - initial sample length)] X 100.

As used herein the term "percent elongation" refers to the relative increase in the length of an elastic material during tensile testing. Percent elongation may be determined utilizing tensile testing equipment such as, for example, an Instron Model 1122 Universal Testing Instrument. Percent elongation is expressed ratio of the difference between the stretched length and the initial length of a sample divided by the initial length of the sample utilizing the following equation:

percent elongation = [(stretched length - initial length)/(initial length)]*100

As used herein, the term "nonwoven web" means a web having a structure of individual fibers or threads which are interlaid, but not in an identifiable, repeating manner. Nonwoven webs have been, in the past, formed by a variety of processes such as, for example, meltblowing processes, spunbonding processes and bonded carded web processes.

As used herein, the term "sheet" means a layer which may either be a film or a nonwoven web.

As used herein, the term "meltblown fibers" means fibers formed by extruding a molten thermoplastic material through a plurality of fine, usually circular, die capillaries as molten threads or filaments into a high velocity gas (e.g. air) stream which attenuates the filaments of molten thermoplastic material to reduce their diameter, which may be to microfiber diameter. Thereafter, the meltblown fibers are carried by the high velocity gas stream and are deposited on a collecting surface to form a web of randomly disbursed meltblown fibers. Such a process is disclosed, for example, in U.S. Patent No. 3,849,241 to Butin, the disclosure of which is hereby incorporated by reference.

As used herein, the term "microfibers" means small diameter fibers having an average diameter not greater than about 100 microns, for example, having an average diameter of from about 0.5 microns to about 50 microns, or more particularly, microfibers may have an average diameter of from about 4 microns to about 40 microns.

As used herein, the term "spunbonded fibers" refers to small diameter fibers which are formed by extruding a molten thermoplastic material as filaments from a plurality of fine, usually circular, capillaries of a spinnerette with the diameter of the extruded filaments then being rapidly reduced as by, for example, eductive drawing or other well-known spun-bonding mechanisms. The production of spun-bonded nonwoven webs is illustrated in patents such as, for example, in U.S. Patent No. 4,340,563 to Appel et al., and U.S. Patent No. 3,692,618 to Dorschner et al. The disclosures of these patents are hereby incorporated by reference.

As used herein, the term "increased pile density" refers to a pile formed of fibrous materials such as fibers or fiber bundles that are attached to an elastic sheet while the elastic sheet is stretched in at least one direction so that, upon recovery of the elastic sheet, the fibrous materials are positioned closer together than before recovery of the elastic sheet. Upon recovery of the elastic sheet the fibrous materials are typically positioned from about 10 percent to about 300 percent closer together, for example, from about 25 to about 100 percent closer together than before recovery of the elastic sheet. Factors that affect the positioning of the fibrous materials closer together include, for example, the elongation at which the elastic sheet is maintained while the fibers or fiber bundles are attached to the elastic sheet, the retractile force of the elastic sheet, the physical proximity and/or size of the fibers or fiber bundles attached to the elastic sheet, and the volume occupied by any fibers or fiber bundles which are inserted into the elastic sheet.

As used herein, the term "increased pile density composite elastic material" refers to an elastic material having at least one elastic sheet and fibrous materials such as fibers (e.g., synthetic fibers, natural fibers, or monofilament strands) or fiber bundles (e.g., yarns, threads, or multifilament strands) projecting in a substantially perpendicular direction from the elastic sheet to form a pile of fibrous materials which may be in the form of strands or loops that are substantially parallel with one another. The elastic sheet and the fibrous materials are substantially united either by inserting the fibrous materials into the elastic sheet or by adhering the fibrous materials onto the elastic sheet to produce a composite elastic material having an increased pile density as described above. The fibrous materials may be inserted into the elastic sheet utilizing processes such as, for example, mechanical needling, stitchbonding, malipole stitchbonding, and tufting. The fibrous materials may be adhered onto the elastic sheet utilizing processes such as, for example, electrostatic flocking.

As used herein, the term "superabsorbent" refers to absorbent materials capable of absorbing at least 10 grams of aqueous liquid (e.g. water) per gram of absorbent material while immersed in the liquid for 4 hours and holding the substantially all absorbed liquid while under a compression force of up to about 1,05 x $10^4$ Pa (1.5 psi).

As used herein, the term "polymer" generally includes, but is not limited to, homopolymers, copolymers, such as, for example, block, graft, random and alternating copolymers, terpolymers, etc. and blends and modifications thereof. Furthermore, unless otherwise specifically limited, the term "polymer" shall include all possible geometrical configurations of the material. These configurations include, but are not limited to, isotactic, syndiotactic and random symmetries.

As used herein, the term "consisting essentially of" does not exclude the presence of additional materials which do not significantly affect the desired characteristics of a given composition or product. Exemplary materials of this sort would include, without limitation, pigments, antioxidants, solvents, stabilizers, surfactants, waxes, flow promoters, particulates and materials added to enhance processability of the composition.

## SUMMARY OF THE INVENTION

The present invention addresses the problems discussed above by providing a method of making an increased pile density composite elastic material including the steps of applying a tensioning force to elongate at least one elastic sheet; attaching fibrous materials to the elastic sheet while the elastic sheet is maintained in an elongated condition so that the fibrous materials protrude from the elastic sheet to form a pile; and releasing the tensioning force so that the attached fibrous materials are positioned closer together by the recovery of the elastic material.

The elastic sheet, such as, for example, an elastic nonwoven web, should be elongated at least about 15 percent, for example, from about 20 to about 400 percent and maintained in that elongated condition while the fibrous materials, such as, for example, a carded batt of staple fibers are attached to the elastic sheet. The fibrous materials may be attached by being inserted into the elastic sheet utilizing processes such as, for example, mechanical needling, stitchbonding, malipole stitchbonding, and tufting. Additional attachment between the inserted fibrous materials and the elastic sheet may be achieved by using a pressure sensitive adhesive elastic sheet or by using a thermal binder. The thermal binder may be in the form of bi-component or multi-component fibers having a low-melting sheath and a high-melting core, or a blend of low-and high-melting fibers. The thermal binder may be used in the elastic sheet or in both the fibrous materials and the elastic sheet. The fibrous materials may also be attached by being adhered onto the elastic sheet utilizing processes such as, for example, electrostatic flocking.

The method described above may be utilized to prepare an increased pile density composite elastic material containing at least one elastic sheet and nonelastic fibrous materials projecting from the elastic sheet to form a pile. Increased pile density composite elastic materials may be made in which the attached fibrous materials protrude from the elastic sheet at least about 1 millimeter to form a pile. For example, the attached fibrous materials may protude from about 1.5 millimeter to more than 3 millimeters.

The elastic sheet may be an elastic film or an elastic nonwoven web of fibers such as, for example, an elastic bonded carded web, a elastic spunbonded web, or an elastic web of meltblown fibers. If the elastic nonwoven web contains meltblown fibers, the meltblown fibers may include meltblown microfibers. The elastic nonwoven web may have multiple layers such as, for example, multiple spunbond layers and/or multiple meltblown layers.

The elastic sheet may be made of an elastic polymer selected from, for example, elastic polyesters, elastic polyurethanes, elastic polyamides, elastic copolymers of ethylene and at least one vinyl monomer, and elastic A-B-A' block copolymers wherein A and A' are the same or different thermoplastic polymer, and wherein B is an elastomeric polymer block. A polyolefin may also be blended with the elastomeric polymer to improve the processability of the composition when the elastic sheet is made using nonwoven extrusion processes. Polyolefins which may be blended with the elastomeric polymer include, for example, polyethylene, polypropylene and polybutylene, including polyethylene copolymers, polypropylene copolymers and polybutylene copolymers. Other substances may be used in addition to or in place of a polyolefin (e.g., a low molecular weight hydrocarbon resin and/or a mineral oil).

The fibrous materials may be nonelastic fibers or nonelastic fiber bundles. The fibers may be in the form of an unbonded web or batt of fibers, such as, for example, a carded batt of staple fibers or a web of loose meltblown fibers. Useful staple fibers have a linear density, for example, from about 0,06 tex (0.5 den) to about 2,23 tex (20 den) and an average length, for example, from about 1,27 cm ($\frac{1}{2}$ inch) to about 15,24 cm (6 inches). If the fibrous materials are fiber bundles, they may be, for example, threads, yarns, or multifilament strands.

The fibrous materials may be natural fibers, such as, for example, plant, animal or mineral fibers. For example, the fibrous materials may be cotton, wool, or glass fibers. The fibrous materials may also be man-made fibers, such as, for example, reconstituted cellulose or synthetic polymer fibers including, for example, fibers formed from nylon, polyester, polypropylene, polyethylene, polybutylene, polyethylene copolymers, polypropylene copolymers, and polybutylene copolymers.

BRIEF DESCRIPTION OF THE DRAWINGS

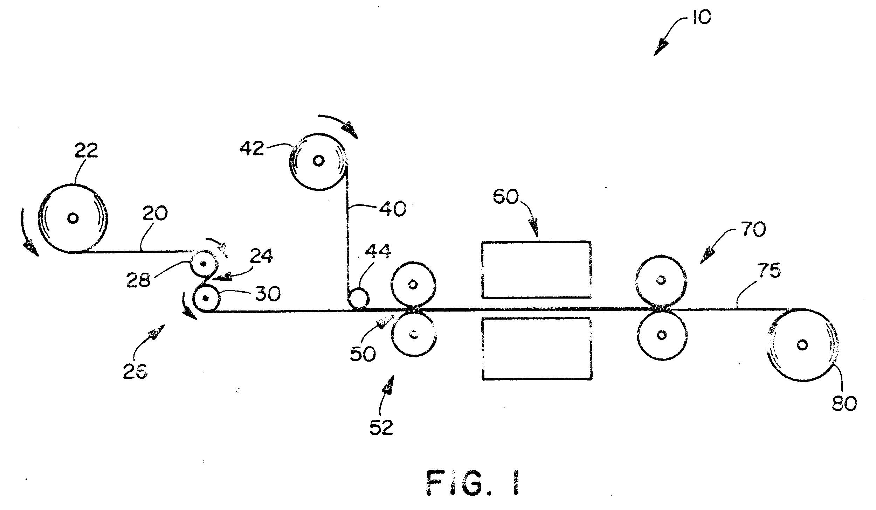

FIG. 1 is a schematic representation of an exemplary process for making an increased pile density composite elastic material.

DETAILED DESCRIPTION OF THE INVENTION

Referring to the drawings where like reference numerals represent like materials or process steps and, in part, to Fig. 1, there is schematically illustrated at 10 a process for forming an increased pile density composite elastic material.

An elastic sheet 20 is unwound from a supply roll 22 and travels in the direction indicated by the arrow associated therewith as the supply roll 22 rotates in the direction of the arrows associated therewith. The elastic sheet 20 passes through a nip 24 of a S-roll arrangement 26 formed by the stack rollers 28 and 30.

The elastic sheet 20 may be formed by known nonwoven extrusion processes, such as, for example, known meltblowing processes or known spunbonding processes, and passed directly through the nip 24 without first being stored on a supply roll.

A layer of fibrous materials 40 is unwound from a supply roll 42 and travels in the direction indicated by the arrow associated therewith as the supply roll 42 rotates in the direction of the arrows associated therewith. The layer of fibrous materials 40 passes idler roller 44 as it is overlaid onto the elastic sheet 20. The fibrous materials 40 may be formed by extrusion processes such as, for example, meltblowing processes or other fiber-forming processes such as, for example, carding processes and overlaid onto the elastic sheet 20 without first being stored on a supply roll. Typically, the fibrous materials 40 are in the form of an unbonded web of fibers such as, for example, a carded web of fibers or a layer of loose fibers which may be deposited directly upon a carrier sheet to transport the loose fibers to elastic sheet 20.

The elastic sheet 20 passes through the nip 24 of the S-roll arrangement 26 in a reverse-S path as indicated by the rotation direction arrows associated with the stack rollers 28 and 30. From the first S-roll arrangement 26, the elastic sheet 20 is overlaid with the layer of fibrous materials 40 as both the elastic sheet 20 and the layer of fibrous materials 40 pass through a nip 50 of a first drive roller arrangement 52. Because the peripheral linear speed of the rollers of the S-roll arrangement 26 is controlled to be less than the peripheral linear speed of the rollers of the first drive roller arrangement 52, the elastic sheet 20 is tensioned between the S-roll arrangement 26 and the nip of the drive roller arrangement 52. By adjusting the difference in the speeds of the rollers, the elastic sheet 20 is tensioned so that it stretches a desired amount. The layer of fibrous materials 40 may also pass through the nip 24 of the S-roll arrangement 26 and be stretched along with the elastic sheet between the S-roll arrangement 26 and the first drive roller arrangement 52.

The elastic sheet 20 is maintained in a uniformly stretched condition as the fibrous materials 40 are attached to the stretched elastic sheet 20 during their passage through the fiber attachment apparatus 60 because the peripheral linear speed of the rollers of a second drive roller arrangement 70 is controlled to be approximately the same as the peripheral linear speed of the rollers of the first drive roller arrangement 52. After passing drive rollers 70, the tension which elongates the elastic sheet 20 with the attached fibrous materials 40 is released so that the attached fibrous materials 40 are positioned more closely together by the recovery of the elastic sheet 20 to form an increased pile density composite elastic material 75 that is stored on a wind-up roll 80.

Other methods of stretching the elastic sheet 20 while the fibrous materials 40 are attached to the elastic sheet 20 may be used such as, for example, tenter frames or other cross-machine direction stretcher arrangements that expand the elastic sheet in one or several other directions such as, for example, in both the machine and the cross-machine direction.

Generally, any suitable elastomeric sheet forming resins or blends containing the same may be utilized for the elastic nonwoven web of fibers. For example, the elastic sheet 20 may be made from block copolymers having the general formula A-B-A' where A and A' are each a thermoplastic polymer endblock which contains a styrenic moiety such as a poly (vinyl arene) and where B is an elastomeric polymer midblock such as a conjugated diene or a lower alkene polymer.

The elastic sheet 20 may be formed from, for example, (polystyrene/ poly(ethylene-butylene)-/polystyrene) block copolymers available from the Shell Chemical Company under the trademark KRATON G. One such block copolymer may be, for example, Kraton™ G-1657.

Other exemplary elastomeric materials which may be used to form the elastic sheet 20 include polyurethane elastomeric materials such as, for example, those available under the trademark ESTANE® from B. F. Goodrich & Co., polyamide elastomeric materials such as, for example, those available under the trademark PEBAX® from the Rilsan Company, and polyester elastomeric materials such as, for example, those available under the trade designation HYTREL® from E. I. DuPont De Nemours & Company. Formation of elastic sheets from polyester elastic materials is disclosed in, for example, U.S. Patent No. 4,741,949 to Morman et al., hereby incorporated by reference. The elastic sheet may also be formed from elastic copolymers of ethylene and at least one vinyl monomer such as, for example, vinyl ester monomers, unsaturated aliphatic monocarboxylic acids and alkyl esters of such unsaturated monocarboxylic acids. These elastic copolymers and methods of forming elastic sheets from such materials are disclosed in, for example, U.S. Patent No. 4,803,117, hereby incorporated by reference.

A polyolefin may also be blended with the elastomeric polymer to improve the processability of the composition when using nonwoven extrusion processes. The polyolefin must be one which, when so blended and subjected to an appropriate combination of elevated pressure and elevated temperature conditions, is extrudable, in blended form, with the elastomeric polymer. Useful blending polyolefin materials include, for example, polyethylene, polypropylene and polybutylene, including polyethylene copolymers, polypropylene copolymers and polybutylene copolymers. A particularly useful polyethylene may be obtained from the U.S.I. Chemical Company under the trade designation Petrothane NA 601 (also referred to herein as PE NA 601 or polyethylene NA 601). Two or more of the polyolefins may be utilized. Extrudable blends of elastomeric polymers and polyolefins are disclosed in, for example, U.S. Patent No. 4,663,220 to Wisneski et al., hereby incorporated by reference.

The elastic sheet 20 may also be a pressure sensitive elastomer adhesive sheet. For example, the elastic material itself may be tacky or, alternatively, a compatible tackifying resin may be added to the extrudable elastomeric compositions described above to provide an elastic sheet 20 that can act as a pressure sensitive adhesive, e.g., to help bond the elastic sheet 20 with the fibrous materials 40. In regard to the tackifying resins and tackified extrudable elastomeric compositions, note the resins and compositions as described in U.S. Patent No. 4,789,699 to Kieffer et al., the disclosure of which is hereby incorporated by reference.

Any tackifier resin can be used which is compatible with the elastomeric polymer and can withstand the high processing (e.g., extrusion) temperatures. If blending materials such as, for example, polyolefins or extending oils are used, the tackifier resin should also be compatible with those blending materials. Generally, hydrogenated hydrocarbon resins are preferred tackifying resins, because of their better temperature stability. REGALREZ™ and ARKON™ P series tackifiers are examples of hydrogenated hydrocarbon resins. ZONATAK™ 501 lite is an example of a terpene hydrocarbon. REGALREZ™ hydrocarbon resins are available from Hercules Incorporated. ARKON™ P series resins are available from Arakawa Chemical (U.S.A.) Incorporated. Of course, the present invention is not limited to use of such three tackifying resins, and other tackifying resins which are compatible with the other components of the composition and can withstand the high processing temperatures, can also be used.

Thus, a pressure sensitive elastomer adhesive sheet which is useful for the increased pile density composite elastic material may be formed from a blend containing, for example, about 40 to about 80 percent, by weight A-B-A'block copolymer; about 5 to about 40 percent, by weight, polyolefin; and about 5 to about 30 percent, by weight, tackifying resin.

Tackiness may also be imparted to the elastic sheet 20 by using a solvent that causes the elastic to become tacky without substantially weakening the elastic. The solvent is then substantially evaporated from the elastic sheet after the elastic sheet 20 and the fibrous materials 40 have been joined.

6

The elastic sheet 20 may also be a multilayer material in that it may include two or more individual coherent webs before being combined with the fibrous materials 40. Additionally, the elastic sheet 20 may be a multilayer material in which one or more of the layers contain a mixture of elastic and nonelastic fibers or particulates. An example of the latter type of elastic sheet, reference is made to U.S. Patent No. 4,209,563, incorporated herein by reference, in which elastomeric and non-elastomeric fibers are commingled to form a single coherent web of randomly dispersed fibers. Another example of such a composite web would be one made by a technique such as disclosed in previously referenced U.S. Patent No. 4,741,949. That patent discloses nonwoven materials which include a mixture of meltblown thermoplastic fibers and other materials. The fibers and other materials (e.g., wood pulp, staple fibers or particulates such as, for example, hydrocolloid (hydrogel) particulates commonly referred to as superabsorbents) are combined in the gas stream in which the meltblown fibers are carried so that an intimate entangled commingling of the meltblown fibers and the other materials occurs prior to collection of the fibers upon a collecting device to form a coherent web of randomly dispersed fibers. The fibrous materials 40 may be fibers or fiber bundles. If the fibrous materials are fibers, they may be in the form of a nonwoven material such as, for example, a nonwoven web in which the fibers are substantially unbonded so that they are loose and may be easily attached to the elastic sheet 20. Such an unbonded web or batt of fibers may be, for example, a carded batt of staple fibers or a web of loose meltblown fibers.

If the nonwoven web contains meltblown fibers the meltblown fibers may also include microfibers. The meltblown fibers may be made of fiber forming polymers such as, for example, polyolefins. Exemplary polyolefins for use in the nonwoven web include one or more of polypropylene, polyethylene, polybutylene, polyethylene copolymers, polypropylene copolymers, and polybutylene copolymers. Useful polypropylenes include, for example, polypropylene available from the Himont Corporation under the trade designation PC-973, polypropylene available from the Exxon Chemical Company under the trade designation Exxon 3445, and polypropylene available from the Shell Chemical Company under the trade designation DX 5A09.

The fibrous materials 40 may also be a mixture of two or more different fibers or a mixture of fibers and particulates. Such mixtures may be formed by adding fibers and/or particulates (e.g., wood pulp, staple fibers and particulates such as, for example, hydrocolloid (hydrogel) particulates commonly referred to as superabsorbent materials) to the gas stream which carries the meltblown fibers. As a result, the meltblown fibers and the other materials may be intimately entangled and mixed prior to collection of the meltblown fibers upon a collecting device to form a coherent web of randomly dispersed meltblown fibers and other materials such as disclosed in previously referenced U.S. Patent U.S. Patent No. 4,741,949.

The fibrous materials 40 may also be in the form of a batt or web of staple fibers, wood pulp fibers or mixtures of the above. Typical mixtures of wood pulp fibers and staple fibers contain from about 20 to about 90 percent by weight staple fibers and from about 10 to about 80 percent by weight wood pulp fibers.

The staple fibers may have a linear density in the range of about 0,06 tex (0.5 den) to about 11,11 tex (100 den) and an average length in the range of about 1,27 cm (0.5 inch) to about 15,24 cm (6 inches). The fibrous materials 40 may be natural fibers such as plant, animal or mineral fibers, such as, for example, cotton, wool or asbestos. Pulp fibers including long natural fiber pulps such as, for example, hardwood pulps may also be used. The fibrous materials 40 may also be man-made fibers such as reconstituted cellulose fibers or synthetic polymer fibers. For example, the fibers may be one or more of rayon, polyester, polyamides, and acrylics. Polyolefins may also be used, including, for example, one or more of polyethylene, polypropylene, polybutylene, polyethylene copolymers, polypropylene copolymers and polybutylene copolymers. Bi-component or multi-component fibers may also be used including, for example, side-by-side and sheath-core bicomponent fibers. Micro fibers may be used in situations such as, for example, when flocking processes are utilized. Fibers used in flocking processes may have an average length as low as 0,19 cm (0.075 inch).

As noted previously, the fibrous materials 40 may be fiber bundles such as, for example, yarns, threads, twines or multifilament materials. Fiber bundles may be used with equipment such as, for example, tufting machines or stitchbonding machines which individually insert the fiber bundles into the stretched elastic sheet 20 by tufting processes or stitchbonding processes rather than by being deposited directly upon the stretched elastic sheet 20 and then inserted by a needling operation.

The type of fibrous materials which are attached to the elastic sheet as well as the pile density of the attached fibrous materials 40 will affect the basis weight of the increased pile density composite elastic material. The increased pile density composite elastic material 70 may have a basis weight ranging from about 10 gsm to about 150 gsm.

The pile density of the attached fibrous materials 40 will vary depending on, for example, the type of fibrous materials used to form the pile, the elongation at which elastic sheet is maintained while the fibrous materials are being attached to the elastic sheet, and the amount that the elastic sheet recovers upon release of the stretching force.

If the fibrous materials 40 are fibers, they may be attached to the elastic sheet 20 by mechanical needling. Mechanical needling may be carried out on needlepunching machines such as, for example, down-punch board machine Model No. DS-2E, up-punch board machine Model No. SM-4E and double-punch needling machine DF-4E, available from Asselin America, Inc., Charlotte, North Carolina. Needle boards having a needle density from about 30 needles per 2,54 cm (per inch) to greater than 240 needles per 2,54 cm (per inch) may be used for most applications.

The fibers of the fibrous materials 40 may also be attached to the elastic sheet 20 while the elastic sheet 20 is in the stretched condition utilizing flocking processes such as, for example, electrostatic flocking or vibration flocking. In flocking processes, an adhesive is applied to a substrate and fibers are implanted into the adhesive using electrostatic forces, compressed air or by applying fibers onto the adhesive and then vibrating the substrate with a beater bar to drive the fibers into the adhesive. An adhesive which remains elastic after it sets should be used if a flexible and elastic flocked composite material is desired. Suitable adhesives include, for example, latex-based flock adhesives such as, for example, adhesives available from the B. F. Goodrich Company under the trade designation Geon® and Hycar®, adhesives available from the Rohm & Haas Company under the trade designation Rhoplex®, and adhesives available from Permuthane, Incorporated under the trade designation Permuthane®. The adhesives may be applied to the elastic sheet 20 by knife-coating, screen-printing or spraying and will set to form a flexible, elastic, and tack free coating which will adhere to many substrates and fibers.

If the fibrous materials 40 are fiber bundles, the fiber bundles may be attached to the elastic sheet 20, utilizing conventional tufting equipment such as tufting machines available from the Card-Monroe Corporation, Hixon, Tennessee, and the Cobble Tufting Machine Company, Dalton, Georgia. The needle gauge of the tufting machines may vary from about 0,40 cm (5/32 inch) to about 0,13 cm (1/20 inch) with the pile height varying from about 5 mm to about 3 mm. The tuft density may range from about 39 tufts per 10 square centimeters to about 106 tufts per 10 square centimeters as measured while the elastic sheet is maintained in an elongated condition.

The elastic sheet 20 should be held under substantially uniform tension while being mechanically needled or tufted to avoid damage to the punch needles or tuft needles. If the elastic sheet 20 is not held securely while it is mechanically needled or tufted, the punch needles or tuft needles may bend and break if they are deflected by non-uniform movements of the elastic sheet 20. The elastic sheet 20 may be held using methods such as, for example, a set of nip rolls rotating at the same speed positioned before and after the mechanical needling apparatus. It is also advantageous to hold the elongated elastic sheet under uniform tension during other fibrous material attachment processes such as, for example, flocking processes to increase the uniformity of the resulting increased pile density composite elastic material.

Stretching the elastic sheet 20 while fibrous materials 40 are being attached onto the elastic sheet will provide desirable characteristics to the resulting composite material as well as advantages to the fiber attachment process. These characteristics include, for example, increased pile density, improved retention of the fibrous materials in the elastic sheet, and improved elongation over equivalent elastic composite materials in which the fibers are attached while the elastic is unstretched. Additionally, the method of the present invention is especially well suited for mechanical needling because high densities of fiber insertion can be accomplished without multiple passes through the needling apparatus. Such multiple passes typically cause matting of the fibers and may destroy the pile characteristics of the composite material.

Although the inventors should not be held to a particular theory of operation, the mechanical needling of nonelastic fibrous materials into an elastic sheet while the elastic sheet is maintained in a stretched condition improves the elasticity of the resulting composite material because the process appears to minimize fiber-to-fiber entanglement between the nonelastic fibrous materials which restricts the ability of the elastic sheet to stretch.

The effective needling density or needling rate of a fiber inserting apparatus such as, for example, a mechanical needling machine, tufting machine or a stitchbonding machine may be increased without increasing the number of needlestrokes per minute or the density of the needles. This may be accomplished by elongating an elastic sheet and then passing the elongated elastic sheet through the fiber inserting apparatus. For example, a needle punch machine having a needle-stroke rate of 2000 strokes/minute and operating at a speed of 20 meters/minute will punch the elastic sheet approximately 100 times/meter with each needle. If the elastic sheet is elongated to a length which is 200% of its relaxed length (i.e., 100 percent elongation) and the elongated elastic sheet is processed at the same needlestroke rate of 2000 strokes/minute and the same speed of 20 meters/minute then, upon relaxation of the elastic sheet, the needlepunch machine will have punched the elastic sheet the equivalent of 200 times/meter with each needle.

When used with mechanical needling equipment, the method of the present invention produces increased pile density composite elastic materials having a higher pile than conventional mechanically needled composite materials (i.e., the substrate remains unstretched during needling). Furthermore, conventional hydraulic entangling processe, especially multiple pass processes may produce composites of fibrous materials and elastic substrates having good fiber retention but which are so intertwined that the entangled fibrous materials are unable to protrude from the substrate to form a pile. Utilizing the method of the present invention, increased pile density composite elastic materials may be made in which the attached fibrous materials protrude at least about 1 millimeter from the surface of the elastic sheet to form a dense pile with desirable fiber retention.

For example, an elastic sheet may be elongated approximately 100% (i.e. approximately 200% of its relaxed length) and fibrous materials may be mechanically needled into the elongated elastic sheet, then if the elastic sheet is allowed to substantially recover to its original unstretched dimension (e.g., within about 20% to 25% of its original unstretched dimension because of the added bulk of the inserted fibrous materials), the mechanical needling sites spaced 2,54 cm (1") apart in the elongated elastic sheet will contract to a spacing of 1,5 to 1,6 cm (0.6" to 0.625") apart in the relaxed fabric. This decrease in the separation between mechanical needling sites upon recovery of the elastic sheet will cause fibers that are attached to the elastic sheet at multiple punch sites to extend further out from the elastic sheet because the length of the fibrous material between the punch sites, also commonly known as the runner length, remains constant. That is, a fiber extending above the elastic substrate, for example, about 0,6 cm (0.25") and anchored at, for example, two punch sites about 2,54 cm (1") apart when the elastic is stretched will typically, upon relaxation of the elastic sheet so the punch sites are spaced about 1,5 cm (0.6") apart, extend about another 0,5 cm (0.2 inch) from the elastic substrate which is about the same distance as the recovery of the elastic material.

Increased pile density composite elastic materials may be made utilizing low basis weight elastic sheets because the method of the present invention allows pile fibers to be incorporated into low basis weight elastic sheets without deteriorating the elastic sheets and because the retraction of the elastic sheet helps to hold or lock the pile fibers into the low basis weight elastic sheet.

EXAMPLE

An unstretched elastic sheet of meltblown ARNITEL® polyetherester fibers made in accordance with the teachings of U. S. patent No. 4,707,398 and having a basis weight of 33,9 g/m$^2$ (1 ounce per square yard) was joined to a batt of 0,33 tex (3 denier) polyethylene terephthalate (PET) fibers having a basis weight of approximately 50,9 g/m$^2$ (1.5 osy). ARNITEL® is the trade designation for a melt processable polyetherester that is available A. Schulman, Inc. of Akron, Ohio or Akzo Plastics of Arnhem, Holland. The elastic sheet and the batt of PET fibers were joined by mechanical needling at a rate of about 500 strokes/minute traveling at a speed of 5.4 meters/minute (92.6 strokes/meter) on an Asselin Model SD 351M04 Needlepunch machine utilizing a down punch needle board with 6 rows of 36 RBA needles at a density was 139 needles per 2,54 cm (needles/inch). The needlepunch machine was set so that the needle penetration was 18.4 mm. The physical characteristics and Grab Tensile Test results for this material were determined utilizing the equipment and procedures detailed below and are reported in Table 1 under the heading "Unstretched".

A section of the same elastic sheet of meltblown polyetherester fibers having a basis weight of 33,9 g/m$^2$ (1 osy) was elongated approximately 263 percent in the machine direction and was joined while in the elongated condition to an unbonded 50,9 g/m$^2$ (1.5 osy) batt of 0,33 tex (3 denier) polyethylene terephthalate (PET) fibers which was also elongated approximately 263 percent in the machine direction. The elastic sheet and the batt of fibers were joined utilizing the Asselin needle punching machine with the same needle board and at the same conditions as the unstretched material except that the mechanical needling of the elongated materials was carried out at a rate of about 850 strokes/minute and at a speed of 9.2 meters/minute (92.4 strokes/meter). The physical characteristics and Grab Tensile Test results for this material were determined utilizing the equipment and procedures detailed below and are reported in Table 1 under the heading "Stretched".

The increased pile density composite elastic material produced using the method of the present invention had a basis weight of 166,1 g/m$^2$ (4.9 osy). The composite elastic material produced by mechanically needling the unstretched elastic sheet had a basis weight of 186,5 g/m$^2$ (5.5 osy). The inventors attribute the lower basis weight of the increased pile density material to the incomplete recovery of the elastic base sheet because of the inserted fibrous materials and the void volume between the fibrous materials held within the elastic base sheet.

Grab Tensile Tests were conducted essentially in accordance with Method 5100 of Federal Test Method Standard No. 191A, utilizing samples of the entangled material having a width of about 10,16 cm (4 inches) and a length of about 15,24 cm (6 inches). The samples were held at opposite ends by a 6,45 cm$^2$ (1 square inch) gripping surface. The samples were tested using an Intellect II tensile testing apparatus available from Thwing Albert having a 7,62 cm (3 inch) jaw span and a crosshead speed of about 30,5 cm (12 inches) per minute. Values for peak load, peak energy absorbed, peak percentage elongation, total energy absorbed and total percentage elongation were determined.

Drape stiffness measurements were performed using a stiffness tester available from Testing Machines, Amityville, Long Island, New York 11701. Test results were obtained in accordance with ASTM standard test D1388-64 using the method described under Option A (Cantilever Test).

The air permeability of each sample was determined in accordance with Method 5450 of Federal Test Method Standard No. 191A.

The following Table 1 includes the basis weight, bulk, density, tensile test data, drape and air permeability results for the previously described unstretched mechanically needled composite elastic material and the increased pile density composite elastic material. Tensile test data indicates significant differences in load, elongation and energy at greater than the 90% confidence level. The tensile load and energy values for the materials are also expressed as the tensile load and energy per unit weight of the material. This was accomplished by dividing the test results for each material by the material's basis weight.

TABLE 1

| Type of Material: | Unstretched | | Stretched | |
|---|---|---|---|---|
| | Mean | s | Mean | s |
| Basis weight | 187,47 g/m$^2$ (5.53 osy) | 0.27 | 166,11 g/m$^2$ (4.90 osy) | 0.29 |
| Bulk | 0,09 cm (0.034 in.) | 0.005 | 0,08 cm (0.033 in.) | 0.006 |
| Density | 0,22 g/cm$^3$ (0.13 oz/in$^3$) | | 0,19 g/cm$^3$ (0.11 oz/in$^3$) | |
| Machine Direction Grab Tensile Test Results | | | | |
| Tensile Load[1] | 9.3 | 1.1 | 10.2 | 2.5 |
| Tensile Load[2] | 1.7 | | 2.4 | |
| Percent Elong. | 148.8 | 10.9 | 177.1 | 37.2 |
| Energy[3] | 19.0 | 2.9 | 26.8 | 9.7 |
| Energy[4] | 3.4 | | 5.5 | |
| Cross-Machine Direction Grab Tensile Test Results | | | | |
| Tensile Load[1] | 9.1 | 3.4 | 14.0 | 6.4 |
| Tensile Load[2] | 1.6 | | 2.9 | |
| Percent Elong. | 56.8 | 7.9 | 82.3 | 15.4 |
| Energy[3] | 5.9 | 2.6 | 11.5 | 7.4 |
| Energy[4] | 1.1 | | 2.1 | |
| Drape[5] | | | | |
| Machine Direction | 2.71 | 0.258 | 2.66 | 0.774 |
| Cross-Machine Direction | 3.98 | 0.940 | 3.70 | 0.570 |
| Air Permeability[6] | 111.5 | 5.59 | 112.8 | 12.1 |

1 = [lbs$_f$] x 4,5 N

2 = [lbs$_f$/ounce] x [4,5 N/0,03 kg]

3 = [(lbs$_f$ * inch)/inch$^2$] x [(4,5 N x 2,54 cm)/6,45 cm$^2$]

4 = [(lbs$_f$ * inch)/(inch$^2$ * ounce)] x [(4,5 N x 2,54 cm)/(6,45 cm$^2$ x 0,03 kg)]

5 = [inches] x [2,54 cm]

6 = [cubic feet per minute] x [0,028 m$^3$ per minute]

Thus, it is apparent that the present invention provides an increased pile density composite elastic material that reduce problems associated with previous materials. While the invention has been described in conjunction with specific embodiments, the disclosed embodiments are intended to illustrate and not to limit the invention. It is understood that those of skill in the art should be capable of making numerous modifications without departing from the scope of the claims.

**Claims**

1. A method of making an increased pile density composite elastic material (75) comprising:
applying a tensioning force to elongate at least one elastic sheet (20);
attaching fibrous material (40) selected from the group consisting of fibres and fibre bundles to the elastic sheet while the elastic sheet (20) is maintained in an elongated condition so that the fibrous materials (40) project in a direction substantially perpendicular to the elastic sheet (20) forming a pile of fibrous materials that are substantially parallel with one another; and releasing the tensioning force so that the attached fibrous materials (40) are positioned closer together by the recovery of the elastic sheet (20).

2. The method of claim 1, wherein the fibrous materials (40) are attached by being inserted into the elastic sheet (20).

3. The method of claim 1, wherein the fibrous materials (40) are attached by being adhered onto the elastic sheet (20).

4. The method of claim 2, wherein the fibrous materials (30) are inserted into the elastic sheet (20) by a process selected from the group consisting of mechanical needling, stitchbonding, and tufting.

5. The method of claim 3, wherein the fibrous materials (40) are adhered onto the elastic sheet (30) by flocking.

6. The method of any one of claims 1 to 5, wherein the elastic sheet (20) is elongated at least about 15 percent.

7. The method of any one of claims 1 to 6, wherein the fibrous materials (40) protrude from the elastic sheet (20) at least about 1 millimeter.

8. An increased pile density composite elastic material (75) comprising:
at least one elastic sheet (20); and nonelastic fibrous materials (40) selected from the group consisting of fibres and fibre bundles, said fibrous materials (40) projecting in a direction substantially perpendicular to the elastic sheet (20) forming a pile of fibrous materials (40) that are substantially parallel with one another.

9. The increased pile density composite elastic material (75) of claim 8, wherein the elastic sheet (20) is comprised of an elastic polymer selected from the group consisting of elastic polyesters, elastic polyurethanes, elastic polyamides, elastic copolymers of ethylene and at least one vinyl monomer, and elastic A-B-A' block copolymers wherein A and A' are the same or different thermoplastic polymer, and wherein B is an elastomeric polymer block.

10. The increased pile density composite elastic material (75) of claim 8 or 9, wherein the elastic sheet (20) is an elastic nonwoven web.

11. The increased pile density composite elastic material (75) of claim 10, wherein the elastic nonwoven web is selected from the group consisting of a web of meltblown fibres, a spunbonded web, and a bonded-carded web.

12. The increased pile density composite elastic material (75) of claim 11, wherein the meltblown fibres include meltblown microfibres.

13. The increased pile density composite elastic material (75) of claims 8 to 12, wherein the elastic sheet (20) is a pressure sensitive elastomer adhesive sheet.

**14.** The increased pile density composite elastic material (75) of claim 13, wherein the pressure sensitive elastomer adhesive sheet (20) is formed from a blend of an elastomeric polymer and a tackifying resin.

**15.** The increased pile density composite elastic material (75) of claim 14, wherein the blend further includes a polyolefin.

**16.** The increased pile density composite elastic material (75) of claim 10, wherein the elastic nonwoven web (20) is a composite web comprising a mixture of meltblown fibres and one or more other materials selected from the group consisting of wood pulp, stapel fibres, particulates and superabsorbent particles.

**17.** The increased pile density composite elastic material (75) of claim 16, wherein the meltblown fibres include meltblown microfibres.

**18.** The increased pile density composite elastic material (75) of any one of claims 8 to 17, wherein the fibrous materials (40) are selected from the group consisting of natural fibres, man-made fibres, yarns, monofilament strands and multifilament strands.

**19.** The increased pile density composite elastic material (75) of claim 18, wherein natural fibres are selected from the group consisting of cotton fibres, pulp fibres, and wool.

**20.** The increased pile density composite elastic material (75) of claim 18, wherein the man-made fibres are selected from reconstituted cellulose fibres and synthetic polymer fibres.

**21.** The increased pile density composite elastic material (75) of claim 20 wherein the synthetic polymer fibres are comprised of a polymer selected from the group consisting of polyolefins, polyesters, and polyamides.

**22.** The increased pile density composite elastic material (75) of claim 21, wherein the polyolefin is selected from the group consisting of one or more of polyethylene, polypropylene, polybutylene, polyethylene copolymers, polypropylene copolymers, and polybutylene copolymers.

**23.** The increased pile density composite elastic material (75) of any one of claims 8 to 22 comprising at least one elastic nonwoven web (20) of meltblown fibres, wherein the increased pile density composite elastic material (75) is capable of being stretched to a length that is at least 200 percent of its relaxed length.

**Patentansprüche**

**1.** Verfahren zum Herstellen eines zusammengesetzten, elastischen Materials (75) erhöhter Flordichte mit den folgenden Verfahrensschritten:
Aufbringen einer Zugkraft um mindestens eine elastische Lage (20) zu verlängern;
Anbringen eines Fasermaterials (40), das ausgewählt ist aus der Gruppe, die aus Fasern und Faserbündeln besteht, an der elastischen Lage, während die elastische Lage (20) in einem verlängertem Zustand gehalten wird, so daß die Fasermaterialien (40) sich in einer Richtung im wesentlichen rechtwinklig zur elastischen Lage (20) erstrecken, um einen Fluor aus Fasermaterialien zu bilden, die untereinander im wesentlichen parallel ausgerichtet sind; und
Wegnehmen der Zugkraft, so daß die angeordneten Fasermaterialien (40) durch die Rückkehr der elastischen Lage (20) enger zueinander angeordnet ist.

**2.** Verfahren nach Anspruch 1, wobei die Fasermaterialien (40) angeordnet werden, in dem man sie in die elastische Lage (20) einsetzt.

**3.** Verfahren nach Anspruch 1, wobei die Fasermaterialien (40) angeordnet werden, in dem sie auf die elastische Lage (20) aufgebracht werden.

**4.** Verfahren nach Anspruch 1, wobei die Fasermaterialien (30) in die elastische Lage (20) durch ein Verfahren eingesetzt werden, das ausgewählt wird aus der Gruppe, die besteht aus mechanischen Nadeln, Flornähen und Tuften.

5. Verfahren nach Anspruch 3, wobei die Fasermaterialien (40) durch Beflocken auf der elastischen Lage (20) befestigt sind.

6. Verfahren nach einem der Ansprüche 1 bis 5, wobei die elastische Lage (20) um mindestens etwa 15 % verlängert wird.

7. Verfahren nach einem der Ansprüche 1 bis 6, wobei die Fasermaterialien (40) von der elastischen Lage (20) mindestens etwa 1 mm vorstehen.

8. Ein zusammengesetztes elastisches Material (75) erhöhter Flordichte mit mindestens einer elastischen Lage (20); und nicht-elastischen Fasermaterialien (40), ausgewählt aus der Gruppe, bestehend aus Fasern und Faserbündeln, wobei die Fasermaterialien (40) in einer Richtung im wesentlichen rechtwinklig zur elastischen Lage (20) vorstehen, wobei sie einen Fluor aus Fasermaterialien (40) bilden, die im wesentlichen parallel zueinander sind.

9. Das zusammengesetzte, elastische Material (75) erhöhter Flordichte nach Anspruch 8, wobei die elastische Lage (20) aus einem elastischen Polymer hergestellt ist, das ausgewählt ist aus der Gruppe, die aus elastischen Polyestern, elastischen Polyurethanen, elastischen Polyamiden, elastischen Äthylen-Copolymeren und mindestens einem Vinylmonomer, und elastischen A-B-A'-Block-Copolymeren besteht, wobei A und A' das gleiche oder unterschiedliche thermoplastische Polymere sind, und wobei B ein elastomerer Polymerblock ist.

10. Das zusammengesetzte, elastische Material (75) erhöhter Flordichte von Anspruch 8 oder 9, wobei die elastische Lage (20) eine elastische, nicht-gewebte Bahn ist.

11. Das zusammengesetzte, elastische Material (75) erhöhter Flordichte nach Anspruch 10, wobei die elastische, nichtgewebte Bahn ausgewählt ist aus der Gruppe, bestehend aus einer Bahn aus schmelzgeblasenen Fasern, einer spinngebundenen Bahn und einer gebundenen, kardierten Bahn.

12. Das zusammengesetzte, elastische Material (75) erhöhter Flordichte nach Anspruch 11, wobei die schmelzgeblasenen Fasern schmelzgeblasene Mikrofasern umfassen.

13. Das Zusammengesetzte, elastische Material (75) erhöhter Flordichte der Ansprüche 8 bis 12, wobei die elastische Lage (20) eine Drucksensitiv-Elastomerkleberschicht ist.

14. Das zusammengesetzte, elastische Material (75) erhöhter Flordichte nach Anspruch 12, wobei die Drucksensitiv-Elastomerkleberschicht (20) aus einer Mischung eines elastomeren Polymers und eines klebrigmachenden Harzes gefertigt ist.

15. Das zusammengesetzte, elastische Material (75) erhöhter Flordichte nach Anspruch 14, wobei die Mischung weiterhin ein Polyolefin enthält.

16. Das zusammengesetzte, elastische Material (75) erhöhter Flordichte nach Anspruch 10, wobei die elastische, nichtgewebte Bahn (20) eine zusammengesetzte Bahn ist, die eine Mischung aus schmelzgeblasenen Fasern und eines oder mehrerer anderer Materialien umfaßt, die ausgewählt sind aus der Gruppe, die aus Holzpulpe, Stapelfasern, Teilchenmaterial und superabsorbierenden Partikeln besteht.

17. Das zusammengesetzte, elastische Material (75) erhöhter Flordichte nach Anspruch 16, wobei die schmelzgeblasenen Fasern schmelzgeblasene Mikrofasern umfassen.

18. Das zusammengesetzte, elastische Material (75) erhöhter Flordichte nach einem der Ansprüche 8 bis 17, wobei die Fasermaterialien (40) ausgewählt sind aus der Gruppe, die aus natürlichen Fasern, künstlich hergestellten Fasern, Garnen, Monofilamentsträngen und Multifilamentsträngen besteht.

19. Das zusammengesetzte, elastische Material (75) erhöhter Flordichte nach Anspruch 18, wobei natürliche Fasern ausgewählt sind aus der Gruppe, die aus Baumwollfasern, Pulpefasern und Wolle besteht.

**20.** Das zusammengesetzte, elastische Material (75) erhöhter Flordichte nach Anspruch 18, wobei die künstlich hergestellten Fasern ausgewählt sind aus rekonstituierten Zellulosefasern und synthetischen Polymerfasern.

**21.** Das zusammengesetzte, elastische Material (75) erhöhter Flordichte nach Anspruch 20, wobei die synthetischen Polymerfasern aus einem Polymer bestehen, das ausgewählt ist aus der Gruppe, die aus Polyolefinen, Polyestern und Polyamiden besteht.

**22.** Das zusammengesetzte, elastische Material (75) erhöhter Flordichte nach Anspruch 21, wobei das Polyolefin ausgewählt ist aus der Gruppe, die aus einem oder mehreren der folgenden Materialien, Polyäthylen, Polypropylen, Polybutylen, Polyäthylen-Copolymere, Polypropylen-Copolymere und Polybutylen-Copolymere besteht.

**23.** Das zusammengesetzte, elastische Material (75) erhöhter Flordichte nach einem der Ansprüche 8 bis 22, umfassend mindestens eine elastische, nicht-gewebte Bahn (20) aus schmelzgeblasenen Fasern, wobei das zusammengesetzte, elastische Material (75) erhöhter Flordichte fähig ist, auf eine Länge gespannt zu werden, die mindestens 200 % seiner entspannten Länge beträgt.

**Revendications**

**1.** Méthode de fabrication d'une matière élastique composite avec une densité de poils augmentée (75) comprenant:

l'application d'une force de tension pour allonger au moins une nappe élastique (20);

la fixation de matières fibreuses (40) sélectionnées dans le groupe comprenant des fibres et des faisceaux de fibres à la nappe élastique pendant que la nappe élastique (20) est maintenue en position allongée pour que les matières fibreuses (40) dépassent dans une direction principalement perpendiculaire à la nappe élastique (20) en formant un poil de matières fibreuses qui sont essentiellement parallèles les unes avec les autres; et

le relâchement de la force de tension pour que les matières fibreuses fixées (40) soient rapprochées du fait du rétablissement de la nappe élastique (20).

**2.** Méthode selon la revendication 1, caractérisée en ce que les matières fibreuses (40) sont fixées par insertion dans la nappe élastique (20).

**3.** Méthode selon la revendication 1, caractérisée en ce que les matières fibreuses (40) sont fixées par collage sur la nappe élastique (20).

**4.** Méthode selon la revendication 2, caractérisée en ce que les matières fibreuses (30) sont insérées dans la nappe élastique (20) par un procédé sélectionné dans le groupe comprenant l'aiguilletage mécanique, le liage par piqûre et le tufting.

**5.** Méthode selon la revendication 3, caractérisée en ce que les matières fibreuses (40) sont collées à la nappe élastique (30) par flocage.

**6.** Méthode selon l'une quelconque des revendications 1 à 5, caractérisée en ce que la nappe élastique (20) est allongée d'au moins 15 pour cent environ.

**7.** Méthode selon l'une quelconque des revendications 1 à 6, caractérisée en ce que les matières fibreuses (40) dépassent de la nappe élastique (20) d'au moins 1 millimètre environ.

**8.** Matière élastique composite avec une densité de poils augmentée (75) comprenant:

au moins une nappe élastique (20); et des matières fibreuses non élastiques (40) sélectionnées dans le groupe comprenant des fibres et des faisceaux de fibres, lesdites matières fibreuses (40) dépassant dans une direction principalement perpendiculaire à la nappe élastique (20) formant un poil de matières fibreuses (40) qui sont principalement parallèles les unes avec les autres.

**9.** Matière élastique composite avec une densité de poils augmentée (75) selon la revendication 8, caractérisée en ce que la nappe élastique (20) comprend un polymère élastique sélectionné dans le groupe comprenant des polyesters élastiques, des polyuréthanes élastiques, des polyamides élastiques, des copolymères d'éthylène élastiques et au moins un monomère vinylique, et des copolymères élastiques en masse A-B-A' où A et A' sont des polymères thermoplastiques identiques ou différents et où B est un bloc de polymère élastomère.

10. Matière élastique composite avec une densité de poils augmentée (75) selon la revendication 8 ou 9, caractérisée en ce que la nappe élastique (20) est une toile non tissée élastique.

11. Matière élastique composite avec une densité de poils augmentée (75) selon la revendication 10, caractérisée en ce que la toile non tissée élastique est sélectionnée dans le groupe comprenant une toile de fibres soufflées en fusion, une nappe de monofils continus désorientés et une nappe cardée non tissée.

12. Matière élastique composite avec une densité de poils augmentée (75) selon la revendication 11, caractérisée en ce que les fibres soufflées en fusion comportent des microfibres soufflées en fusion.

13. Matière élastique composite avec une densité de poils augmentée (75) selon les revendications 8 à 12, caractérisée en ce que la nappe élastique (20) est une nappe adhésive élastomère sensible à la pression.

14. Matière élastique composite avec une densité de poils augmentée (75) selon la revendication 13, caractérisée en ce que la nappe adhésive élastomère sensible à la pression (20) est formée d'un mélange de polymère élastomère et de résine adhésifiante.

15. Matière élastique composite avec une densité de poils augmentée (75) selon la revendication 14, caractérisée en ce que le mélange comporte en outre une polyoléfine.

16. Matière élastique composite avec une densité de poils augmentée (75) selon la revendication 10, caractérisée en ce que la toile non tissée élastique (20) est une toile composite comprenant un mélange de fibres soufflées en fusion et une ou plusieurs autres matières sélectionnées dans le groupe comprenant de la cellulose technique, des fibres discontinues, des matières particulaires et des particules superabsorbantes.

17. Matière élastique composite avec une densité de poils augmentée (75) selon la revendication 16, caractérisée en ce que les fibres soufflées en fusion comportent des microfibres soufflées en fusion.

18. Matière élastique composite avec une densité de poils augmentée (75) selon l'une quelconque des revendications 8 à 17, caractérisée en ce que les matières fibreuses (40) sont sélectionnées dans le groupe comprenant des fibres naturelles, des fibres artificielles, des fils, des brins monofilaires et des brins multifilaires.

19. Matière élastique composite avec une densité de poils augmentée (75) selon la revendication 18, caractérisée en ce que les fibres naturelles sont sélectionnées dans le groupe comprenant des fibres de coton, des fibres de pâte et de la laine.

20. Matière élastique composite avec une densité de poils augmentée (75) selon la revendication 18, caractérisée en ce que les fibres artificielles sont sélectionnées dans le groupe comprenant des fibres de cellulose régénérée et des fibres polymères synthétiques.

21. Matière élastique composite avec une densité de poils augmentée (75) selon la revendication 20, caractérisée en ce que les fibres polymères synthétiques sont constituées d'un polymère sélectionné dans le groupe comprenant des polyoléfines, des polyesters et des polyamides.

22. Matière élastique composite avec une densité de poils augmentée (75) selon la revendication 21, caractérisée en ce que la polyoléfine est sélectionnée dans le groupe comprenant une ou plusieurs matières parmi le polyéthylène, le polypropylène, le polybutylène, les copolymères de polyéthylène, les copolymères de polypropylène et les copolymères de polybutylène.

**23.** Matière élastique composite avec une densité de poils augmentée (75) selon l'une quelconque des revendications 8 à 22, caractérisée en ce qu'elle comprend au moins une toile non tissée élastique (20) de fibres soufflées en fusion, où la matière élastique composite avec une densité de poils augmentée (75) est capable de s'étirer jusqu'à une longueur qui représente au moins 200 pour cent de sa longueur détendue.

FIG. 1